# EUROPÄISCHE PATENTSCHRIFT

(11) **EP 1 925 479 B1**
(45) Veröffentlichungstag und Bekanntmachung des Hinweises auf die Patenterteilung: **16.03.2011**
(21) Anmeldenummer: 07120444.0
(22) Anmeldetag: 12.11.2007
(51) Int. Cl.: B60J 5/04, B60J 5/06

(54) **Fahrzeugtür**
Vehicle door
Porte de véhicule

(30) Priorität: 27.11.2006 DE 102006055817
(43) Veröffentlichungstag der Anmeldung: 28.05.2008
(73) Patentinhaber: Ford Global Technologies, LLC, Dearborn, MI 48126 (US)
(72) Erfinder: Benderoth, Thomas, 51647 Gummersbach (DE); Lichter, Martin, 50374 Erftstadt (DE)
(74) Vertreter: Dörfler, Thomas

(56) Entgegenhaltungen:
- WO-A-2004/110799
- DE-A1- 4 314 115
- DE-A1- 10 334 143
- FR-A- 2 892 345
- JP-A- 59 034 924
- US-A1- 2007 125 003
- US-B1- 6 340 199
- US-B1- 6 641 205

## Beschreibung

Die Erfindung betrifft eine Fahrzeugtür zum Verschließen einer in einem Fahrzeugrahmen vorgesehenen Türöffnung, wobei die Fahrzeugtür Karosseriebleche, ein in Einbaulage dem Fahrzeuginneren zugewandtes Innenblech und ein in Einbaulage vom Fahrzeuginneren abgewandtes Außenblech, aufweist, die fest miteinander verbunden sind und einen Hohlraum begrenzen.

Die Karosseriebleche einer Fahrzeugtür der eingangs genannten Art sind üblicherweise tiefgezogen und weisen, tiefgezogen, einen nach außen hin offenen Innenraum auf. Zum Zusammenbau der Fahrzeugtür werden die Karosseriebleche zur Ausbildung des Hohlraumes mit ihren Innenräumen zueinander gekehrt angeordnet und miteinander verbunden. Dies ist beispielsweise aus der EP 1 057 673 B1 oder der EP 1 275 539 A1 ersichtlich. Um beim Tiefziehen tiefziehtechnisch aufwändige Hinterschneidungen zu vermeiden und um eine leichtere Entformbarkeit zu gewährleisten, werden das jeweils umzuformende Karosserieblech allgemein so ausgelegt, dass sich der Innenraum nach außen hin bzw. die den Innenraum seitlich begrenzenden Seitenwände konisch erweitern, wodurch das Karosserieblech eine wannenartige Grundform erhält. Eine hierbei zu leistende Umformarbeit hängt im wesentlichen vom Umformgrad, insbesondere von der Tiefe der zu schaffenden Innenräume, ab. Desgleichen wird die Entformbarkeit mit wachsender Innenraumtiefe erschwert.

Aus der DE10334143 A1 ist eine Fahrzeugtür bekannt, die aus einer Außenbaugruppe, die im wesentlichen ein Türaußenblech mit einem im Randbereich umlaufenden Verstärkungsbereich aufweist, und einem innenliegenden Aggregateträger, der ebenfalls einen umlaufenden Verstärkungsbereich aufweist, besteht. Außenbaugruppe und Aggregateträger liegen an den Verstärkungsbereichen teilweise flächig aufeinander und sind durch lösbare Verbindungsmittel wie Schrauben oder Nieten verbunden. Im Verbindungsbereich ist eine Türdichtung angeordnet, um die Verbindungsmittel zu überdecken. Die Verbindung zwischen Außenbaugruppe und Aggregateträger ist dahingehend optimiert, den Zusammenbau und die Demontage der beiden fertig vormontierten Baugruppen ohne Beschädigung derselben zu ermöglichen. Für eine einteiligen Tür ist die Herstellung der Verbindung jedoch zu aufwendig.

Der Erfindung liegt daher die Aufgabe zugrunde, eine Fahrzeugtür der eingangs genannten Art bereitzustellen, die mit weniger Aufwand herstellbar ist.

Die gestellte Aufgabe wird erfindungsgemäß durch die im kennzeichnenden Teil des Patentanspruchs 1 genannten Merkmale gelöst.

Somit können umgebogene, den Hohlraum seitlich begrenzende und Schmalseiten bildende Teilbereiche von Außenblech und/oder Innenblech, welche bei einer herkömmlichen Fahrzeugtür beim Tiefziehprozess einer starken und damit verfahrensseitig aufwändigen und werkstoffseitig komplexen Verformung unterworfen sind, durch das Stirnblech zumindest teilweise ersetzt werden. Die verformungsintensiven Teilbereiche können um die Ausdehnung des Stirnbleches senkrecht zu den größeren Seitenflächen von Innenblech oder Außenblech reduziert oder sogar vollständig weggelassen werden. Ferner kann durch das zusätzliche Stirnblech der Hohlraum der Fahrzeugtür so konzipiert werden, dass Hinterschneidungen bezüglich einer Entformungsrichtung senkrecht zur größeren Seitenfläche des Außenbleches oder des Innenbleches möglich werden, ohne dass die Hinterschneidung die Verformung der einzelnen Karosseriebleche zumindest erschwert wird, indem die Hinterschneidungen als Formbereiche senkrecht zur größeren Seitenfläche des Stirnbleches eingebracht sind. Um in Einbaulage den Hohlraum zu begrenzen und um beim Tiefziehen leicht entformbar zu sein, weisen ein übliches Außenblech und Innenblech eine Querschnittsform auf, die im Prinzip U-förmig mit kurzen Schenkeln als umgebogene Teilbereiche aufweist, wobei die Schenkel in Richtung zu ihren freien Enden hin leicht konisch auseinander laufend ausgebildet sind. Mit dem erfindungsgemäßen Aufbau der Fahrzeugtür ist eine größere Konstruktionsfreiheit gegeben, dank derer beispielsweise eine die Steifigkeit der Fahrzeugtür erhöhende Querschnittsform der Fahrzeugtür konzipiert werden kann.

Vorzugsweise ist das Stirnblech vollumfänglich seitlich mit dem Innenblech und dem Außenblech verbunden, so dass der Hohlraum zumindest zum Stirnblech hin vollständig von einem umgebenden Raum abgetrennt ist. Hiermit wird der Aufbau des Stirnbleches vereinfacht.

Das Stirnblech zur seiner Verbindung mit dem Innenblech und dem Außenblech randseitig Verbindungsbereiche sowie Außenblech und Innenblech randseitig Verbindungsabschnitte umfassen und die Verbindungsbereiche und Verbindungsabschnitte in einer Verbindungsposition sich überlappen und/oder zumindest teilweise flächig aneinander anliegen. Hierbei können die Verbindungsabschnitte und Verbindungsbereiche beispielsweise miteinander verklebt, verlötet oder verschweißt sein.

Erfindungsgemäß erstrecken sich Verbindungsbereiche und Verbindungsabschnitte in der Verbindungsposition mit ihren freien Enden vom Hohlraum weg, wobei die Verbindungsbereiche und/oder die ihnen jeweils zugeordneten Verbindungsabschnitte umgebogen sind und in der Verbindungsposition einen gemeinsamen Verbindungsflansch ausbilden. Da das Stirnblech vollumfänglich mit dem Innenblech bzw. mit dem Außenblech verbunden sein kann, kann der Verbindungsflansch das Stirnblech randseitig vollständig und ringartig umschließen. Dank ihrer Erstreckungsrichtung vom Hohlraum weg sind die Verbindungsflansche beispielsweise zur Herstellung ihrer Verbindung von Verbindungsbereich und Verbindungsabschnitt leicht von außen her zugänglich.

Hierzu können die beiden Verbindungsbereiche zur Anlage an den Verbindungsabschnitt des jeweils zugeordneten Bleches zu einer seitlichen Erstreckung umgebogen sein. Somit kann die Richtung der Längserstreckung der Verbindungsbereiche gleich der der Verbindungsanschnitte sein. Zweckmäßigerweise kann das Umbiegen der Verbindungsbereiche und/oder der Verbindungsabschnitte mit dem Tiefziehen des Stirnbleches bzw. des Außenbleches und/oder des Innenbleches erfolgen.

In einer bevorzugten Weiterbildung der Fahrzeugtür ist der Verbindungsflansch an der Schmalseite der Fahrzeugtür angeordnet. Vorzugsweise erstreckt sich der Verbindungsflansch in einer Erstreckungsrichtung im Wesentlichen senkrecht zum Stirnblech. Der Verbindungsflansch kann in Einbaulage einen äußeren Verbindungsflansch und einen inneren Verbindungsflansch aufweisen. Innerer und äußerer Verbindungsflansche können hierbei in Einbaulage im Wesentlichen vertikal verlaufen. Ferner können die beiden Verbindungsflansche endseitig zu ihrer Längserstreckung in Einbaulage durch einen oberen Verbindungsflansch und einen unteren Verbindungsflansch zu einem vorzugsweise geschlossenen Flanschring verbunden sein. Der Flanschring folgt in seinem Verlauf vorzugsweise dem Profil des Stirnbleches und bleibt in seiner Flanschhöhe, d.h. in seiner Erstreckung von dem Stirnblech weg, bevorzugt etwa gleich. In Einbaulage der Fahrzeugtür als Seitentür kann sich der Verbindungsflansch etwa in oder gegen Fahrtrichtung oder mit einer größeren Wegkomponente in oder parallel zu einer größeren Seitenfläche der Fahrzeugtür erstrecken. Somit ist der Verbindungsflansch konstruktiv nicht störend angeordnet und kann, wie weiter unten erläutert, für weitere Funktionen vorgesehen sein. Bevorzugt erstreckt sich das Stirn blech zwischen den Verbindungsflanschen vollständig oder nahezu vollständig in einer Ebene, welches den Aufbau der Autotür vereinfacht. In einer Konstruktionsvariante kann das Stirnblech unter Ausbildung des äußeren Verbindungsflansches und des inneren Verbindungsflansches mit den an es angrenzenden Karosserieblechen verbunden sein.

In einer Weiterbildung der Fahrzeugtür weist dieselbe eine Dichtungsvorrichtung zu ihrer Abdichtung in der Türöffnung auf. Ferner kann der Verbindungsflansch zur Aufnahme von Dichtungselemente der Dichtungsvorrichtung und/oder die Dichtungselemente an den Verbindungsflansch angepasst seinausgebildet sein.

Vorzugsweise weisen die Dichtungselemente einen Dichtungswerkstoff, wie Gummi oder Kunststoff, einen Längskörper mit Längsluftkammern zur elastischen und dichtenden Anlage an eine an einem Fahrzeugrahmenteil oder an einer benachbarten Fahrzeugtür vorgesehenen Dichtungsfläche auf und sind bevorzugt mit einer Aufnahmelängsnut für den zugehörigen Verbindungsflansch extrudiert. Weiter bevorzugt sind die Dichtungselemente mit der Aufnahmelängsnut in einer Steckposition auf den Verbindungsflansch aufsteckbar oder aufschiebbar. Die Dichtungselemente können so auf dem Verbindungsflansch aufgebracht sein, dass sie diesen in seiner Längserstreckung bevorzugt parallel zum Stirnblech und/oder in Richtung bevorzugt senkrecht zum Stirnblech nahezu vollständig oder vollständig überdecken.

Vorzugsweise ist in der Aufnahmelängsnut ein an sich bekanntes, vorzugsweise U-förmiges Federelement zur Aufnahme des jeweiligen Verbindungsflansches integriert, das vorzugsweise mit der Aufnahmelängsnut nach außen hin offen ist. Das Federelement kann so angeordnet, dass es mit seinen Schenkeln parallel zu den Innenseitenwänden der Aufnahmelängsnut verläuft und zur Nutenöffnung hin offen ist. Federelement kann die Seitenwände der Aufnahmelängsnut ausbilden. Das Federelement kann mit dem Dichtungselement koextrudiert bzw. der Dichtungswerkstoff kann über das Federelement extrudiert sein, wobei das Federelement hiernach bevorzugt in dem Dichtungswerkstoff eingebettet ist. Der extrudierte Dichtungswerkstoff kann auch über das Federelement gebracht und mit diesem verbunden sein. Zur Verbesserung des Haltes des Dichtungselementes auf dem Verbindungsflansch können an einer Nutseitenfläche der Aufnahmelängsnut flexible Haltevorsprünge angeordnet sein, die die Aufnahmenut durchragen und in der Steckposition seitlich unter Spannung an dem Verbindungsflansch anliegen. Die Haltevorsprünge durchragen die Aufnahmenut bevorzugt mit einem Weganteil von dem Innenraum weg. Vorzugsweise können die Längsluftkammern insbesondere der senkrechten Dichtungselemente der Wasserableitung dienen. Dies erlaubt die Integration der Wasserführung an der Stirnseite der Schiebetür in das Dichtungssystem.

Die Dichtungselemente können einen vorzugsweise geschlossenen Dichtungsring bilden. Hierzu kann ein als Vorprodukt extrudierter Dichtungsstrang passend abgelängt und endseitig zu dem Dichtungsring verklebt sein. Vorzugsweise sind für die jeweiligen Verbindungsflansche zugeordnete Abschnitte des Dichtungsringes aus dem Dichtungsstrang einzeln abgelängt und endseitig zu dem gemeinsamen Dichtungsring verklebt oder anvulkanisiert. Zweckmäßigerweise ist der Dichtungsring in seinem Verlauf dem Flanschring angepasst. Somit kann der Dichtungsring als Ganzes über den Dichtungsring gebracht oder auf diesen aufgezogen werden. In einer Abwandlung, bei der das Stirnblech lediglich unter Ausbildung des äußeren Verbindungsflansches und des inneren Verbindungsflansches mit den an es angrenzenden Karosserieblechen verbunden ist, können zur Ausbildung des Ringflansches Verbindungsstücke vorgesehen sein, die benachbarte Enden der beiden Verbindungsflansche miteinander verbinden. Diese können mit den Enden verklebt oder anvulkanisiert sein. Die Verbindungsstücke können auf einem Träger und/oder in einer Aufnahme der Fahrzeugtür montiert, geschoben oder gesteckt sein.

In einer bevorzugten Weiterbildung ist der äußere Verbindungsflansch in Erstreckungsrichtung um einen Betrag vor dem inneren Verbindungsflansch angeordnet. Der Betrag kann gleich, etwa gleich oder etwas größer als die Erstreckung des inneren Verbindungsflansches in Erstreckungsrichtung sein. Da sich dadurch die beiden Verbindungsflansch in Richtung senkrecht zu einer größeren Seitenfläche der Fahrzeugtür überlappen oder aneinander anschließen, kann eine zum Fahrgastraum hin gestufte Abdichtung der Fahrzeugtür am Fahrzeugrahmen oder an einer benachbarten Tür erfolgen. Vorzugsweise sind der äußere und der innere Verbindungsflansch oder einander gegenüberliegende Verbindungsflansch mit einem geringen Weganteil senkrecht zur Erstreckungsrichtung zueinander geneigt angeordnet. Hierdurch kann die Positionierung des Stirn bleches vor seiner Verbindung mit den Karosserieblechen erleichtert werden. Ferner kann dadurch verwirklicht werden, dass sich die Verbindungsflansche nicht senkrecht zu der ihm zugeordnete Dichtungsfläche hin sondern in einer bevorzugt geringen Neigung dazu erstreckt.

Der Verbindungsflansch kann geschweißt, vorzugsweise punktgeschweißt sein.

In einer Weiterbildung der Fahrzeugtür kann das Innenblech und/oder das Außenblech jeweils in einem randseitigen Endabschnitt zur Schmalseite hin umgebogen sein. Ferner kann der Endabschnitt des Innenbleches und/oder des Außenbleches in einem ersten Bereich einen Abschnitt der Schmalseite der Fahrzeugtür bilden und in einem zweiten Bereich mit dem Stirnblech unter Ausbildung zumindest eines Teilabschnittes des Verbindungsflansches verbunden sein. Somit kann also der zweite Bereich den Verbindungsabschnitt bilden, der, wie oben beschrieben, zur Ausbildung eines gemeinsamen Verbindungsflansches mit dem Verbindungsbereich des Stirnbleches zumindest mit einer Wegkomponente vom Hohlraum wegweisend umgebogen sein kann. Dadurch können die betreffenden Abschnitte des Verbindungsflansches von der Außenseite bzw. Innenseite der Autotür in die Schmalseite hinein so versetzt, dass die aufgesetzten Dichtungselemente auch in einer Dichtungsposition nicht über die größere Seitenfläche des Innenbleches und/oder des Außenbleches hinausragen, und können somit besser zur Abdichtung gegen eine an einem Fahrzeugrahmenteil oder an einer benachbarten Fahrzeugtür vorgesehenen Dichtungsfläche gebracht werden. Der jeweilige Endabschnitt kann mit der mit ihm verbundenen größeren Seitenfläche einen Winkel von 60° bis 120°, vorzugsweise von 75° bis 105° oder bevorzugter von 85° bis 95° einschließen. Dadurch kann unter anderem der Betrag bestimmt werden, um den der äußere Verbindungsflansch in Erstreckungsrichtung vor dem inneren Verbindungsflansch angeordnet ist.

Die Erfindung umfasst ferner ein Fahrzeugtürsystem, das einen Fahrzeugrahmen mit einer Türöffnung und eine Fahrzeugtür gemäß einer der zuvor beschriebenen Ausführungsformen und -Variationen aufweist, wobei die Fahrzeugtür in einer Schließrichtung aus einer Offenposition in die Türöffnung in eine Schließposition verfahrbar ist.

Die Türöffnung kann bezüglich der Karosserie statisch mittels Fahrzeugrahmenteilen oder teilweise bezüglich der Karosserie dynamisch durch eine benachbarte zweite Fahrzeugtür begrenzt werden. Letzteres ist beispielsweise in bekannter Weise bei einer fehlenden mittleren Säule oder B-Säule gegeben, wodurch eine einzelne in Fahrtrichtung oder X-Richtung des Fahrzeuges hintere und eine in Fahrtrichtung vordere Türöffnung zu einer gegenüber den einzelnen Türöffnungen erweiterten Gesamttüröffnung zusammengefasst sind. Wie allgemein üblich, kann die Fahrzeugtür in der Schließposition mittels einer Schließvorrichtung festlegbar sein.

Allgemein kann die Fahrzeugtür in die Türöffnung in Schließrichtung hinein verschwenkbar und/oder verschiebbar. Das an einer Schmalseite angeordnete Stirnblech kann vorzugsweise so positioniert sein, dass es mit zumindest einem Weganteil und/oder über einen Bereich in Schließrichtung weist.

Vorzugsweise ist die Fahrzeugtür als Schiebetür ausgebildet, die in einer Schließrichtung längs eines relativ zu dem Fahrzeugrahmen nichtlinearen Schiebeweges aus der Offenposition in die Schließposition verschiebbar ist. Hierbei kann das Stirnblech an der in Schließrichtung hinteren Schmalseite der Fahrzeugtür angeordnet sein. Im Fahrzeugbau, insbesondere im Personenkraftfahrzeugbau, sind Schiebetüren in der Regel an Fahrzeugseiten parallel zur Fahrtrichtung oder verschiebbar in x-Richtung des Fahrzeuges angeordnet und werden in Fahrtrichtung bei in Fahrtrichtung hinten angeordneten Schiebetüren und gegen Fahrtrichtung bei in Fahrtrichtung vorne angeordneten Schiebetüren geschlossen, so dass die größeren Seitenflächen oder die der Schiebetür parallel zur Seitenfläche der Karosserie verläuft und die Schiebetür in der Schließposition in der Karosserie integriert ist. Hierbei ist üblicherweise, wie auch hier beansprucht, an der hinteren Schmalseite Dichtungselemente vorgesehen, die die weiter oben beschriebene Ausbildung aufweisen können.

Die als Schiebetür ausgebildete Fahrzeugtür kann über eine Führungseinrichtung mit Führungsschienen verschiebbar sein. Hierbei kann eine in Schließrichtung hintere Führungsschiene, in der die Schiebetür mit einem in Schließrichtung hinteren Endbereich verschiebbar gelagert ist, einen S-förmigen Verlauf mit einem in Schließrichtung hinteren Endabschnitt aufweisen, der etwa parallel zur größeren Seitenfläche der Schiebetür in der Schließposition angeordnet ist. Hierbei wird unter "mit etwa parallel" eine positive oder negative Abweichung von wenigen Grad verstanden, so dass der hintere Endabschnitt mit einem geringen Weganteil zum Fahrzeuginneren hin oder mit einem geringen Weganteil nach Außen hin geführt sein kann. Bevorzugt ist eine zur größeren Seitenfläche der Schiebetür in der Schließposition parallele Ausrichtung des hinteren Endabschnittes.

Hierbei kann das Stirnblech in der Schließposition gegen eine Säule, bevorzugt gegen eine B-Säule, des Fahrzeugrahmens oder gegen eine Seitenfläche einer benachbarten zweiten Fahrzeugtür dichtend anliegen. Somit wird das Stirnblech in Schließrichtung gegen eine Stirnfläche eines entsprechendes Fahrzeugrahmenteiles, wie der B-Säule, oder, beispielsweise bei einem Fahrzeugrahmen ohne B-Säule, gegen eine angrenzende Stirnfläche einer Nachbartür verschoben und liegt mittels der Dichtungsvorrichtung dichtend an der jeweiligen Stirnfläche an. Es kann somit ein Dichtungsprofil mit mindestens einer Dichtungsfläche zur dichtenden Anlage an die Dichtungselemente der Fahrzeugtür in seiner Schließposition vorgesehen sein, wobei die Dichtungsfläche an einem Fahrzeugrahmenteil oder an einer Schmalseite einer benachbarten Tür vorgesehen ist, das in der Schließposition dem ihm zugeordneten Dichtungsflansch der abzudichtenden Fahrzeugtür mit dem Dichtungselement gegenüber liegt.

Die vorliegende Erfindung wird im Folgenden anhand eines in einer Zeichnung dargestellten Ausführungsbeispieles näher erläutert. In der Zeichnung zeigen:
- Figur 1: eine perspektivische Seitenansicht einer Schiebetür ohne Außenblech; und
- Figur 2: eine horizontale Schnittansicht durch einen Teil eines Fahrzeugtürsystems mit der Schiebetür in einem Schnittverlauf A-A gemäß Figur 1.

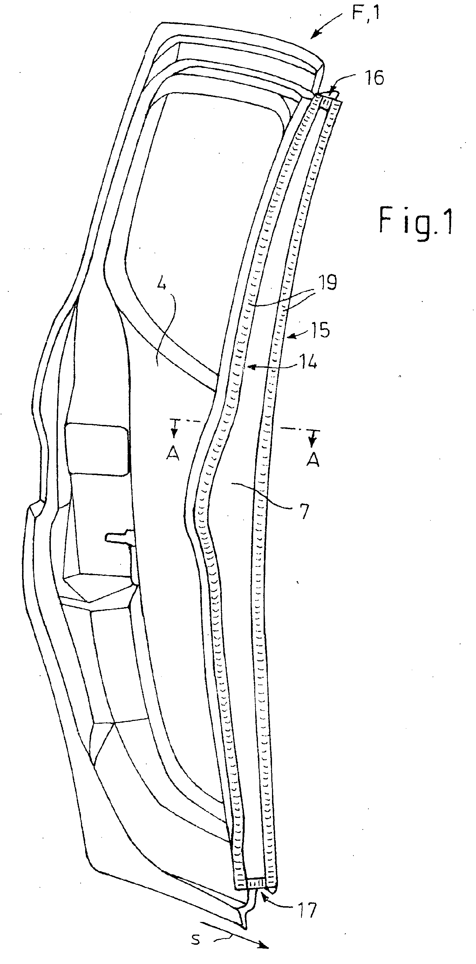

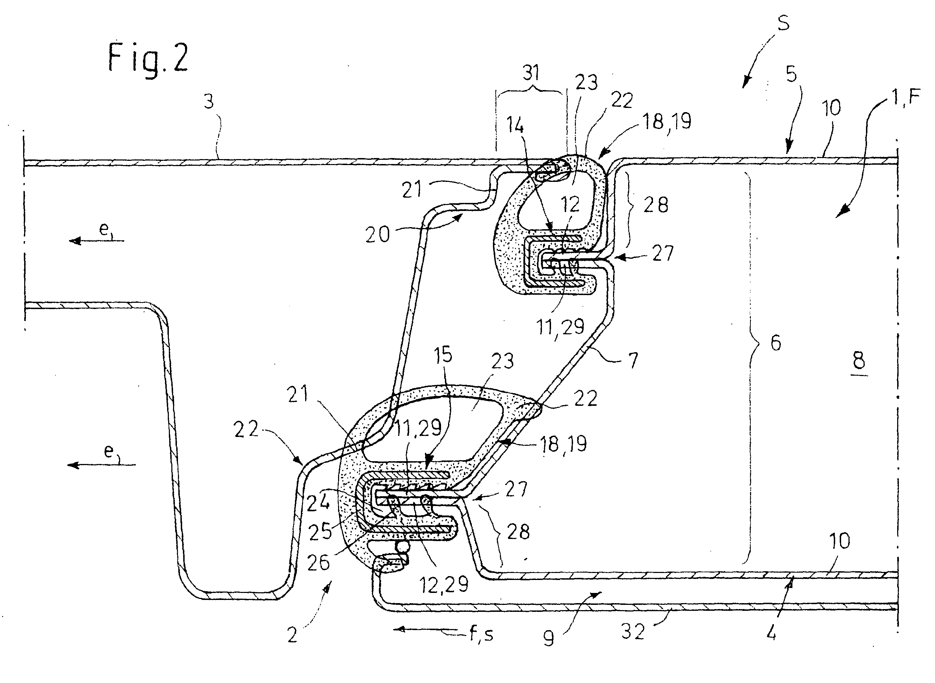

In Figur 1 wird eine perspektivische Seitenansicht einer als Schiebetür 1 ausgebildete Fahrzeugtür F zum Verschließen einer in einem nicht weiter dargestellten Fahrzeugrahmen vorgesehenen Türöffnung 2 gezeigt. In den Figuren 2 und 3 ist vereinfacht und schematisiert eine horizontale bzw. vertikale Schnittansicht durch einen Teil eines Fahrzeugtürsystems S mit der Schiebetür 1 in einem Schnittverlauf A-A bzw. B-B gemäß Figur 1 dargestellt. Figur 2a zeigt einen Ausschnittsvergrößerung IIa gemäß Figur 2. In den Figuren 2 und 3 verschließt die Schiebetür 1 in einer hier gezeigten Schließposition die Türöffnung 2 und schließt an eine benachbarte Seitentür 3 an. Damit ist ein Fahrzeugrahmen ohne sog. B-Säule vorgesehen, so dass die Türöffnung gemeinsam durch die Schiebetür 1 und die Schwenktür 3 verschließbar ist. Die Seitentür 3 ist hier als Schwenktür ausgebildet, die in Figur 2 in einer Schließposition gezeigt ist, wobei ihre Schwenkachse außerhalb der in den Figur 2 gezeigten Teilansicht des Fahrzeugtürsystems S angeordnet ist und der in den Figur 2 gezeigte Abschnitt der Seitentür 3 in die Türöffnung 2 hinein verschwenkt ist.

Die Schiebetür 1 weist ein in Einbaulage dem Fahrzeuginneren zugewandtes Innenblech 4 und ein in Einbaulage vom Fahrzeuginneren abgewandtes Außenblech 5 sowie erfindungsgemäß an einer Schmalseite 6 der Schiebetür 1 als ein weiteres Karosserieblech ein Stirnblech 7 zur Begrenzung eines Hohlraumes 8 auf. Das Stirnblech 7 ist seitlich und vollumfänglich mit dem Innenblech 4 und dem Außenblech 5 fest verbunden. Der klareren Darstellung der Erfindung halber, ist die Schiebetür 1 in Figur 1 ohne Außenblech gezeigt.

Die Schiebetür 1 ist über eine hier nicht dargestellte Führungseinrichtung mit Führungsschienen in einer Schließrichtung s aus einer hier nicht gezeigten Offenposition in eine in Figur 1 wiedergegebene Schließposition verschiebbar. Eine ebenfalls hier nicht dargestellte, in Schließrichtung s hintere Führungsschiene, in der die Schiebetür 1 mit einem in Schließrichtung s hinteren Endbereich 9 verschiebbar gelagert ist, weist einen S-förmigen Verlauf mit einem in Schließrichtung s hinteren Endabschnitt aufweist, der etwa parallel zu einer größeren Seitenfläche 10 der Schiebetür 1 in der Schließposition angeordnet ist. Dadurch wird die Schiebetür 1 mit ihrem Endbereich 9 auf dem hinteren Endabschnitt etwa parallel zur größeren Seitenfläche 10 und damit, bei Einbau der Schiebetür 1 als in Fahrtrichtung f hintere Seitentür, in Fahrtrichtung f geführt, wobei diese dann etwa gleich der Schließrichtung s ist. Dies hat zur Folge, dass die Schmalseite 6 mit dem Stirnblech 7 beim Erreichen der Schließposition senkrecht oder nahezu senkrecht gegen die Seitentür 3 geführt wird bzw. in Figur 2 geführt ist.

Wie insbesondere der Figur 2 entnehmbar, ist das Stirnblech 7 randseitig zu Verbindungsbereichen 11 umgebogen. In gleicher Weise sind Innenblech 4 und Außenblech 5 jeweils zu Verbindungsabschnitten 12 umgebogen, die sich hier in Erstreckungsrichtung e vom Hohlraum 8 weg erstrecken und in der hier gezeigten Verbindungsposition flächig aneinander anliegen. Die Erstreckungsrichtung e entspricht hier in etwa der Fahrtrichtung f bzw. der Schließrichtung s. Die Verbindungsbereiche 11 und Verbindungsabschnitte 12 sind zu einem gemeinsamen Verbindungsflansch 14, 15 miteinander punktverschweißt. Die Punktverschweißung selbst ist in der als Prinzipskizze angelegtem Schnitt in Figur 2 nicht eigens wiedergegeben, um die relative Lage von Verbindungsbereichen 11 und Verbindungsabschnitten 12 klarer zeigen zu können.

Wie der Figur 1 entnehmbar, weist der Verbindungsflansch einen in Einbaulage dem Fahrgastraum abgewandten äußeren Verbindungsflansch 14 und einen in Einbaulage dem Fahrgastraum zugewandten inneren Verbindungsflansch 15 auf, wobei diese Verbindungsflansche 14, 15 in Figur 2 geschnitten sind. Ferner sind der innere Verbindungsflansch 15 und der äußere Verbindungsflansch 14 endseitig zu ihren Längserstreckungen in Einbaulage durch einen oberen Verbindungsflansch 16 und einen unteren Verbindungsflansch 17 verbunden, so dass die miteinander verbundenen Verbindungsflansche 14-17 eine geschlossene Flanschringform aufweisen.

Auf dem Verbindungsflansch 14, 15 ist als Teil einer Dichtungsvorrichtung der Schiebetür 1 in der Türöffnung 3 ein dem Verbindungsflansch 14, 15, 16, 17 angepasster, ringförmig geschlossener Dichtungsring 19 aufgesteckt. Das Dichtungselement 18 ist zur Abdichtung der Schiebetür 1 gegen ein Dichtungsprofil 20 mit Dichtflächen 21 seitlich an der vorderen Seitentür 3 geführt und müsste in einer wirklichkeitsgetreuen Darstellung der Schließposition der Schiebetür 1 entsprechend verformt dargestellt sein. Um aber hierüber zugleich die Funktion und ein verformbares Volumen des Dichtungselementes 18 wiederzugeben, ist das Dichtungselement 18 ist in den Prinzipskizzen in Figuren 2 und 3 unverformt dargestellt, wobei das verformbare Volumen des Dichtungselementes 18 der Bereich des Dichtungselementes 18 ist, der in das Dichtungsprofil 20 hineinragt.

Die Dichtungselemente 18 sind aus einem Dichtungswerkstoff wie Gummi oder Kunststoff zu einem Längskörper 22 mit Längsluftkammern 23 zur elastischen und dichtenden Anlage an die jeweils vorgesehenen Dichtungsfläche 21 extrudiert. Die Dichtungselemente 18 sind mit einer Aufnahmelängsnut 24 zum Aufstecken der Dichtungselemente 18 auf den zugehörigen Verbindungsflansch 14, 15 gefertigt, wobei die Dichtungselemente 18 in einer Steckposition wiedergegeben sind, in der diese mittels der Aufnahmelängsnut 24 auf dem Verbindungsflansch 15 positioniert sind. Zur Bewehrung und Anklammerung an der Aufnahmelängsnut 24 ist ein U-förmiges Federelement 25 vorgesehen, das in den Dichtungswerkstoff des Dichtungselementes 18 eingebettet ist und das einen sicheren Halt des Dichtungselementes 18 auf dem Verbindungsflansch 14, 15 verstärkt. Zusätzlich sind zur Verbesserung des Haltes der Dichtungselemente 18 auf dem Verbindungsflansch 14, 15 innenseitig der Aufnahmelängsnut 24 flexible Haltevorsprünge 26 angeordnet, die die Aufnahmelängsnut 24 durchragen und in der Steckposition seitlich unter Spannung an dem Verbindungsflansch 15 anliegen. Die Haltevorsprünge 26 durchragen die Aufnahmelängsnut 24 mit einem Weganteil von dem Hohlraum 8 weg, d.h. hier in Fahrtrichtung f. Ihre Verformung in der Steckposition ist wie die der Dichtungselemente 18 in der Schließposition nicht angezeigt.

Zur Verbesserung der Abdichtung der Schmalseite 6 der Schiebetür 1 gegen die Seitentür 3 sind Innenblech 4 und Außenblech 5 jeweils in einem randseitigen Endabschnitt 27 zur Schmalseite 6 hin umgebogen, wobei die Endabschnitte 27 jeweils in einem ersten Bereich 28 einen Abschnitt der Schmalseite 6 der Schiebetür 1 und in einem zweiten Bereich 29 den Verbindungsabschnitt 12 bildet, der, zusammen mit dem Verbindungsbereich 11 des Stirnbleches 7 verschweißt, den inneren Verbindungsflansch 15 bzw. den äußeren Verbindungsflansch 14 ausbildet. Dadurch sind die Verbindungsflansche 14, 15 von der Innenseite bzw. der Außenseite jeweils zur Mitte der Schmalseite 6 hin versetzt. Die vordere Seitentür 3 weist ferner an ihrer Außenseite 30 einen Überlappungsbereich 31 auf, der sich entgegen der Fahrzeugrichtung f erstreckt und in Schließposition der Seitentür 3 und der Schiebetür 1 den äußeren Verbindungsflansch 14 mit dem darauf aufgesteckten Dichtungselement 18 insbesondere in dem Abschnitt abdeckt und schützt, in dem das Dichtungselement 18 an der ihm zugeordnete Dichtungsfläche 21 angreift und somit der eigentliche Abdichtungsvorgang erfolgt.

Zudem ist der äußere Verbindungsflansch 14 in Schließrichtung s bzw. in Erstreckungsrichtung e vor dem inneren Verbindungsflansch 15 angeordnet, wobei das Dichtungsprofil 20 an der Seitentür 3 entsprechend stufig angepasst ausgebildet ist. Hierdurch erfolgt die Abdichtung der Schiebetür 1 an ihrer Schmalseite 6 in einer Dichtrichtung d vom Außenblech 5 zum Innenblech 4 hin, wobei der äußere Verbindungsflansch 14 mit seinem Dichtungselement 18 in Schließrichtung s vor dem inneren Verbindungsflansch 15 mit seinem Dichtungselement 19 an die ihnen jeweils zugeordnete Dichtungsfläche 21 dichtend angreift und somit den Abschnitt abdeckt und schützt, in dem das Dichtungselement 19 des inneren Verbindungsflansches 15 an der ihm zugeordnete Dichtungsfläche 21 angreift und somit der eigentliche Abdichtungsvorgang erfolgt. Somit erfolgt die Abdichtung der Schiebetür 1 an ihrer Schmalseite 6 von außen nach innen in Schritten, die in Fahrtrichtung f zueinander versetzt sind.

Wie ferner der Schnittansicht in Figur 2 entnehmbar, sind gegenüberliegende Verbindungsflansche 14,15 um einen geringen Winkelbetrag zueinander geneigt angeordnet.

Somit ist durch das Einfügen des Stirnbleches 7 in die Schmalseite 6 eine Erleichterung und Vereinfachung im Tiefziehen des Innenbleches 4 und Außenbleches 5 erzielt. Das Stirnblech 7 ist unter Ausbildung der sich vom Hohlraum 8 weg und in etwa in Schließrichtung s erstreckenden Verbindungsflansche 14, 15 mit dem Innenblech 4 und dem Außenblech 5 verbunden, die von außen leicht zugänglich ist. Die Verbindungsflansche 14, 15 dienen zugleich als einfacher Träger der steckbaren Dichtungselemente 18, die das Stirnblech 7 ringförmig umschließen. Dadurch wird eine doppelte Abdichtung der Schiebtür 1 im Bereich des Stirnbleches geschaffen. Infolge des zu der größeren Seitenfläche 10 der Schiebetür 1 etwa parallelen Verlaufes des hier nicht gezeigten hinteren Endabschnittes der nicht dargestellten Führungseinrichtung aufweist, wird die Schiebetür mit ihrer Schmalseite 6 senkrecht oder nahezu senkrecht gegen das Dichtungsprofil 20 geführt. Infolge dessen ist es unerheblich, ob sich das Dichtungsprofil an einem Fahrzeugrahmenteil oder an der hier gezeigten benachbarten Seitentür 3 angeordnet ist.

Eine Dichtwirkung durch die an den Dichtungsflächen 21 anliegenden Dichtungselementen 19 wird konstruktiv durch weitere Maßnahmen verbessert, indem der äußere Verbindungsflansch 14 in Schließrichtung vor dem inneren Verbindungsflansch 15 angeordnet ist und somit in Richtung von dem Außenblech 5 zu dem Innenblech 4 eine gestufte Abdichtung erfolgt. Des Weiteren sind die beiden Verbindungsflansche 14,15 nicht am Rande der Schmalseite 6, sondern zu ihrer Mitte hin angeordnet. Ferner deckt die Überlappungsbereich 31 der Seitentür 3, an der das Dichtungselement 19 des äußeren Verbindungsflansches 14 in der Schließposition innenseitig dichtend anliegt, dieses Dichtungselement schützend ab.

Innenseitig dem Innenblech 4 vorgelagert, ist eine Innenraumabdeckung 32 vorgesehen, die gleichzeitig durch das auf den inneren Verbindungsflansch 15 aufgesteckte Dichtungselement 19 in Fahrtrichtung f zur Seitentür 3 hin abgedichtet wird.

### Bezugszeichenliste

- 1: Schiebetür
- 2: Türöffnung
- 3: Seitentür
- 4: Innenblech
- 5: Außenblech
- 6: Schmalseite
- 7: Stirnblech
- 8: Hohlraum
- 9: Endbereich
- 10: Seitenfläche
- 11: Verbindungsbereich (Stirnblech)
- 12: Verbindungsabschnitt
- 14: Äußerer Verbindungsflansch
- 15: Innerer Verbindungsflansch
- 16: Oberer Verbindungsflansch
- 17: Unterer Verbindungsflansch
- 18: Dichtungselement
- 19: Dichtungsring
- 20: Dichtungsprofil
- 21: Dichtungsfläche
- 22: Längskörper
- 23: Längsluftkammer
- 24: Aufnahmelängsnut
- 25: Federelement
- 26: Haltevorsprung
- 27: Endabschnitt
- 28: Erster Bereich
- 29: Zweiter Bereich
- 30: Außenseite
- 31: Überlappungsbereich
- 32: Innenraumabdeckung
- e: Erstreckungsrichtung
- d: Dichtungsrichtung
- f: Fahrtrichtung
- s: Schließrichtung
- F: Fahrzeugtür
- S: Fahrzeugtürsystem

## Patentansprüche

1. Fahrzeugtür (F) zum Verschließen einer in einem Fahrzeugrahmen vorgesehenen Türöffnung (2), wobei die Fahrzeugtür (F) Karosseriebleche, ein in Einbaulage dem Fahrzeuginneren zugewandtes Innenblech (4) und ein in Einbaulage vom Fahrzeuginneren abgewandtes Außenblech (5), aufweist, die fest miteinander verbunden sind und einen Hohlraum (8) begrenzen, wobei zumindest an einer Schmalseite (6) der Fahrzeugtür (F) als ein weiteres Karosserieblech ein Stirnblech (7) zur Begrenzung des Hohlraumes (8) vorgesehen ist, und wobei das Stirnblech (7) seitlich mit dem Außenblech (5) und dem Innenblech (4) fest verbunden ist, und wobei das Stirnblech (7) zu seiner Verbindung mit dem Innenblech (4) und dem Außenblech (5) randseitig Verbindungsbereiche (11) sowie Außenblech (5) und Innenblech (4) randseitig Verbindungsabschnitte (12) umfassen, und wobei sich Verbindungsbereiche (11) und Verbindungsabschnitte (12) in einer Verbindungsposition überlappen und/oder zumindest teilweise flächig aneinander anliegen,
**dadurch gekennzeichnet , dass**
Verbindungsbereiche (11) und Verbindungsabschnitte (12) sich in der Verbindungsposition mit ihren freien Enden vom Hohlraum (8) weg erstrecken, wobei die Verbindungsbereiche (11) und/oder die ihnen jeweils zugeordneten Verbindungsabschnitte (12) umgebogen sind und in der Verbindungsposition gemeinsame Verbindungsflansche (14, 15) ausbilden.

2. Fahrzeugtür (F) nach Anspruch 1,
**dadurch gekennzeichnet, dass**
das Stirnblech (7) vollumfänglich seitlich mit dem Innenblech (4) und dem Außenblech (5) verbunden ist.

3. Fahrzeugtür (F) nach Anspruch 1 oder 2,
**dadurch gekennzeichnet , dass**
dass der Verbindungsflansch (14, 15) an der Schmalseite (6) der Fahrzeugtür (F) angeordnet ist und sich in einer Erstreckungsrichtung (e) im wesentlichen senkrecht zum Stirnblech (7) erstreckt, wobei der Verbindungsflansch (14, 15) in Einbaulage ein äußerer Verbindungsflansch (14) und/oder ein innerer Verbindungsflansch (15) ist.

4. Fahrzeugtür (F) nach Anspruch 3,
**dadurch gekennzeichnet , dass**
der innere Verbindungsflansch (15) und der äußere Verbindungsflansch (14) endseitig zu ihren Längserstreckungen in Einbaulage durch einen oberen Verbindungsflansch (16) und einen unteren Verbindungsflansch (17) zu einem Flanschring verbunden sind.

5. Fahrzeugtür (F) nach einem der vorherigen Ansprüche,
**dadurch gekennzeichnet , dass**
eine Dichtungsvorrichtung zur Abdichtung der Fahrzeugtür (F) in der Türöffnung (2) vorgesehen ist und dass der Verbindungsflansch (14, 15) zur Aufnahme von Dichtungselemente (18) der Dichtungsvorrichtung ausgebildet ist.

6. Fahrzeugtür (F) nach Anspruch 5,
**dadurch gekennzeichnet , dass**
die Dichtungselemente (19) einen Dichtungswerkstoff wie Gummi oder Kunststoff zu einem Längskörper (22) mit Längsluftkammern (23) zur elastischen und dichtenden Anlage an eine an einem Fahrzeugrahmenteil oder an einer benachbarten Fahrzeugtür (F) vorgesehenen Dichtungsfläche (21) aufweisen und dass die Dichtungselemente (19) mit einer Aufnahmelängsnut (24) für den zugehörigen Verbindungsflansch (14, 15) extrudiert sind, wobei die Dichtungselemente (19) mit der Aufnahmelängsnut (24) in einer Steckposition auf den Verbindungsflansch (14, 15) aufsteckbar oder aufschiebbar sind.

7. Fahrzeugtür (F) nach Anspruch 5 oder 6,
**dadurch gekennzeichnet, dass**
die Dichtungselemente (18) einen Dichtungsring (19) bilden.

8. Fahrzeugtür (F) nach einem der vorherigen Ansprüche,
**dadurch gekennzeichnet, dass**
der Verbindungsflansch (14, 15) geschweißt, insbesondere punktgeschweißt, ist.

9. Fahrzeugtür (F) nach einem der vorherigen Ansprüche,
**dadurch gekennzeichnet , dass**
das Innenblech (4) und/oder das Außenblech (5) jeweils in einem randseitigen Endabschnitt (27) zur Schmalseite (6) hin umgebogen sind und dass der Endabschnitt (27) in einem ersten Bereich einen Abschnitt der Schmalseite (6) der Fahrzeugtür (F) bildet und in einem zweiten Bereich mit dem Stirnblech (7) verbunden ist.

10. Fahrzeugtürsystem (S), das einen Fahrzeugrahmen mit einer Türöffnung (2) und eine Fahrzeugtür (F) nach einem der vorherigen Ansprüche aufweist, wobei die Fahrzeugtür (F) in einer Schließrichtung (s) aus einer Offenposition in die Türöffnung (2) in eine Schließposition verfahrbar ist.

11. Fahrzeugtürsystem (S) nach Anspruch 10,
**dadurch gekennzeichnet, dass**
die Fahrzeugtür (F) eine Schiebetür (1) ist, die in einer Schließrichtung (s) längs eines relativ zu dem Fahrzeugrahmen nichtlinearen Schiebeweges zwischen Offenposition und Schließposition hin und her verschiebbar ist, wobei das Stirnblech (7) in der Schließposition gegen eine Säule, bevorzugt gegen eine B-Säule, des Fahrzeugrahmens oder gegen eine Seitenfläche (10) einer benachbarten zweiten Fahrzeugtür (F) dichtend anliegt.

12. Fahrzeugtürsystem (S) nach Anspruch 11,
**dadurch gekennzeichnet, dass**
die Schiebetür (1) über eine Führungseinrichtung mit Führungsschienen verschiebbar ist und dass eine in Schließrichtung (s) hintere Führungsschiene, in der die Schiebetür (1) mit einem in Schließrichtung (s) hinteren Endbereich (9) verschiebbar gelagert ist, einen S-förmigen Verlauf mit einem in Schließrichtung (s) hinteren Endabschnitt (27) aufweist, der etwa parallel zur größeren Seitenfläche (10) der Schiebetür (1) in der Schließposition angeordnet ist.

13. Fahrzeugtürsystem (S) nach Anspruch 11 oder 12,
**dadurch gekennzeichnet , dass**
das Stirnblech (7) in der Schließposition gegen eine Säule, insbesondere gegen eine B-Säule, des Fahrzeugrahmens oder gegen eine Seitenfläche (10) einer benachbarten zweiten Fahrzeugtür (F) dichtend anliegt.

14. Fahrzeugtürsystem (S) nach einem der Ansprüche 10 bis 13 mit einer Fahrzeugtür (F) nach einem der Ansprüche 5 bis 9,
**gekennzeichnet durch**
ein Dichtungsprofil (20) mit mindestens einer Dichtungsfläche (21) zur dichtenden Anlage an die Dichtungselemente (18) der Fahrzeugtür (F) in seiner Schließposition, wobei die Dichtungsfläche an einem Fahrzeugrahmenteil oder an einer Schmalseite (6) einer benachbarten Tür vorgesehen ist, das oder die in der Schließposition dem Stirnblech (7) gegenüber liegt.

## Claims

1. Vehicle door (F) for closing a door opening (2) provided in a vehicle frame, the vehicle door (F) having body panels, an inner panel (4) which, in the fitted position, faces the vehicle interior, and an outer panel (5) which, in the fitted position, faces away from the vehicle interior, said panels being connected fixedly to each other and delimiting a cavity (8), an end panel (7) for delimiting the cavity (8) being provided as a further body panel at least on one narrow side (6) of the vehicle door (F), and the end panel (7) being connected fixedly laterally to the outer panel (5) and the inner panel (4), and the end panel (7) comprising connecting regions (11) on the edge sides for its connection to the inner panel (4) and the outer panel (5), and outer panel (5) and inner panel (4) comprising connecting sections (12) on the edge sides, and connecting regions (11) and connecting sections (12) overlapping in a connecting position and/or bearing at least partially in a sheetlike manner against each other, **characterized in that**, in the connecting position, connecting regions (11) and connecting sections (12) extend away from the cavity (8) at their free ends, the connecting regions (11) and/or the connecting sections (12) assigned in each case to them being bent over and, in the connecting position, forming at least one common connecting flange (14, 15) .

2. Vehicle door (F) according to Claim 1, **characterized in that** the end panel (7) is connected laterally over the full circumferential extent to the inner panel (4) and the outer panel (5).

3. Vehicle door (F) according to Claim 1 or 2, **characterized in that** the connecting flange (14, 15) is arranged on the narrow side (6) of the vehicle door (F) and extends in a direction of extent (e) essentially perpendicular to the end panel (7), the connecting flange (14, 15) being an outer connecting flange (14) and/or an inner connecting flange (15) in the fitted position.

4. Vehicle door (F) according to Claim 3, **characterized in that**, in the fitted position, the inner connecting flange (15) and the outer connecting flange (14) are connected on their end sides with respect to their longitudinal extents by an upper connecting flange (16) and a lower connecting flange (17) to form a flange ring.

5. Vehicle door (F) according to one of the preceding claims, **characterized in that** a sealing device is provided for sealing the vehicle door (F) in the door opening (2), and **in that** the connecting flange (14, 15) is designed for receiving sealing elements (18) of the sealing device.

6. Vehicle door (F) according to Claim 5, **characterized in that** the sealing elements (19) have a sealing material, such as rubber or plastic, to form a longitudinal body (22) with longitudinal air chambers (23) for elastic and sealing bearing against a sealing surface (21) provided on a vehicle frame part or on an adjacent vehicle door (F), and **in that** the sealing elements (19) are extruded with a receiving longitudinal groove (24) for the associated connecting flange (14, 15), with it being possible for the sealing elements (19) to be plugged or pushed onto the connecting flange (14, 15) by means of the receiving longitudinal groove (24) in a plug-in position.

7. Vehicle door (F) according to Claim 5 or 6, **characterized in that** the sealing elements (18) form a sealing ring (19).

8. Vehicle door (F) according to one of the preceding claims, **characterized in that** the connecting flange (14, 15) is welded, in particular spot-welded.

9. Vehicle door (F) according to one of the preceding claims, **characterized in that** the inner panel (4) and/or the outer panel (5) are each bent over in an edge-side end section (27) toward the narrow side (6), and **in that** the end section (27), in a first region, forms a section of the narrow side (6) of the vehicle door (F) and, in a second region, is connected to the end panel (7).

10. Vehicle door system (S) which has a vehicle frame with a door opening (2) and a vehicle door (F) according to one of the preceding claims, the vehicle door (F) being movable in a closing direction (s) from an open position into the door opening (2) into a closed position.

11. Vehicle door system (S) according to Claim, **characterized in that** the vehicle door (F) is a sliding door (1) which can be displaced to and fro between open position and closed position in a closing direction (s) along a sliding path which is nonlinear relative to the vehicle frame, the end panel (7), in the closed position, bearing in a sealing manner against a pillar, preferably against a B pillar, of the vehicle frame or against a side surface (10) of an adjacent second vehicle door (F).

12. Vehicle door system (S) according to Claim 11, **characterized in that** the sliding door (1) can be displaced via a guide device with guide rails, and **in that** a guide rail which is at the rear in the closing direction (s) and in which the sliding door (1) is mounted displaceably by means of an end region (9) which is at the rear in the closing direction (s) has an S-shaped profile with an end section (27) which is at the rear in the closing direction (s) and, in the closed position, is arranged approximately parallel to the larger side surface (10) of the sliding door (1).

13. Vehicle door system (S) according to Claim 11 or 12, **characterized in that**, in the closed position, the end panel (7) bears in a sealing manner against a pillar, in particular against a B pillar, of the vehicle frame or against a side surface (10) of an adjacent second vehicle door (F).

14. Vehicle door system (S) according to one of Claims 10 to 13 with a vehicle door (F) according to one of Claims 5 to 9, **characterized by** a sealing profile (20) with at least one sealing surface (21) for bearing in a sealing manner against the sealing elements (18) of the vehicle door (F) in its closed position, the sealing surface being provided on a vehicle frame part or on a narrow side (6) of an adjacent door, which frame part or narrow side lies opposite the end panel (7) in the closed position.

## Revendications

1. Porte de véhicule (F) pour la fermeture d'une ouverture de porte (2) prévue dans un châssis de véhicule, la porte de véhicule (F) présentant des tôles de carrosserie, une tôle interne (4) tournée, dans la position d'installation, vers l'intérieur du véhicule et une tôle externe (5) opposée, dans la position d'installation, à l'intérieur du véhicule, lesquelles sont connectées fixement l'une à l'autre et délimitent une cavité (8), une tôle frontale (7) étant prévue pour limiter la cavité (8) au moins au niveau d'un côté étroit (6) de la porte de véhicule (F) en tant que tôle de carrosserie supplémentaire, la tôle frontale (7) étant connectée fixement à la tôle externe (5) et à la tôle interne (4), et la tôle frontale (7), pour sa connexion à la tôle interne (4) et à la tôle externe (5), comprenant des régions de connexion (11) du côté des bords, et la tôle externe (5) et la tôle interne (4) comprenant des portions de connexion (12) du côté des bords, et les régions de connexion (11) et les portions de connexion (12) se chevauchant dans une position de connexion et/ou s'appliquant au moins en partie à plat l'une contre l'autre,
**caractérisée en ce que**
les régions de connexion (11) et les portions de connexion (12) s'étendent dans la position de connexion avec leurs extrémités libres à l'écart de la cavité (8), les régions de connexion (11) et/ou les portions de connexion (12) qui leurs sont respectivement associées étant recourbées et constituant dans la position de connexion des brides de connexion communes (14, 15).

2. Porte de véhicule (F) selon la revendication 1,
**caractérisée en ce que**
la tôle frontale (7) est connectée sur tout son pourtour latéralement à la tôle interne (4) et à la tôle externe (5).

3. Porte de véhicule (F) selon la revendication 1 ou 2,
**caractérisée en ce que**
la bride de connexion (14, 15) est disposée sur le côté étroit (6) de la porte de véhicule (F) et s'étend dans une direction d'étendue (e) essentiellement perpendiculaire à la tôle frontale (7), la bride de connexion (14, 15), dans la position d'installation, étant une bride de connexion externe (14) et/ou une bride de connexion interne (15).

4. Porte de véhicule (F) selon la revendication 3,
**caractérisée en ce que**
la bride de connexion interne (15) et la bride de connexion externe (14) sont connectées à l'extrémité de leurs étendues longitudinales dans la position d'installation par une bride de connexion supérieure (16) et une bride de connexion inférieure (17) pour former une bride annulaire.

5. Porte de véhicule (F) selon l'une quelconque des revendications précédentes,
**caractérisée en ce qu'**il est prévu dans l'ouverture de la porte (2) un dispositif d'étanchéité pour l'étanchéification de la porte de véhicule (F), et **en ce que** la bride de connexion (14, 15) est réalisée pour recevoir des éléments d'étanchéité (18) du dispositif d'étanchéité.

6. Porte de véhicule (F) selon la revendication 5,
**caractérisée en ce que**
les éléments d'étanchéité (19) présentent un matériau d'étanchéité tel que du caoutchouc ou du plastique pour former un corps oblong (22) avec des chambres d'air longitudinales (23) pour l'application élastique et hermétique contre une surface d'étanchéité (21) prévue sur une partie de châssis du véhicule ou sur une porte de véhicule adjacente (F), et **en ce que** les éléments d'étanchéité (19) sont extrudés avec une rainure longitudinale de réception (24) pour la bride de connexion associée (14, 15), les éléments d'étanchéité (19) pouvant être enfichés ou poussés avec la rainure longitudinale de réception (24) dans une position enfichée sur la bride de connexion (14, 15).

7. Porte de véhicule (F) selon la revendication 5 ou 6,
**caractérisée en ce que**
les éléments d'étanchéité (18) forment une bague d'étanchéité (19).

8. Porte de véhicule (F) selon l'une quelconque des revendications précédentes,
**caractérisée en ce que**
la bride de connexion (14, 15) est soudée, notamment soudée par point.

9. Porte de véhicule (F) selon l'une quelconque des revendications précédentes,
**caractérisée en ce que**
la tôle interne (4) et/ou la tôle externe (5) sont recourbées à chaque fois dans une portion d'extrémité du côté des bords (27) vers le côté étroit (6), et **en ce que** la portion d'extrémité (27) forme dans une première région une portion du côté étroit (6) de la porte de véhicule (F) et dans une deuxième région est connectée à la tôle frontale (7).

10. Système de porte de véhicule (S) qui présente un châssis de véhicule avec une ouverture de porte (2) et une porte de véhicule (F) selon l'une quelconque des revendications précédentes, dans lequel la porte de véhicule (F) peut être déplacée dans une direction de fermeture (s) d'une position ouverte dans l'ouverture de la porte (2) dans une position fermée.

11. Système de porte de véhicule (S) selon la revendication 10,
**caractérisé en ce que**
la porte de véhicule (F) est une porte coulissante (1) qui peut être coulissée d'avant en arrière dans une direction de fermeture (s) le long d'une course de coulissement non linéaire par rapport au châssis du véhicule, entre la position ouverte et la position fermée, la tôle frontale (7) s'appliquant hermétiquement dans la position fermée contre un montant, de préférence un montant B, du châssis du véhicule, ou contre une face latérale (10) d'une deuxième porte de véhicule (F) adjacente.

12. Système de porte de véhicule (S) selon la revendication 11,
**caractérisé en ce que**
la porte coulissante (1) peut être coulissée par le biais d'un dispositif de guidage avec des rails de guidage et **en ce qu'**un rail de guidage arrière dans la direction de fermeture (s), dans lequel la porte coulissante (1) est montée de manière coulissante avec une région d'extrémité arrière (9) dans la direction de fermeture (s), présente une allure en forme de S avec une portion d'extrémité arrière (27) dans la direction de fermeture (s), qui est disposée approximativement parallèlement à la plus grande face latérale (10) de la porte coulissante (1) dans la position fermée.

13. Système de porte de véhicule (S) selon la revendication 11 ou 12,
**caractérisé en ce que**
la tôle frontale (7) s'applique de manière hermétique dans la position fermée contre un montant, notamment un montant B du châssis du véhicule ou contre une face latérale (10) d'une deuxième porte de véhicule (F) adjacente.

14. Système de porte de véhicule (S) selon l'une quelconque des revendications 10 à 13, comprenant une porte de véhicule (F) selon l'une quelconque des revendications 5 à 9,
**caractérisé par**
un profilé d'étanchéité (20) avec au moins une face d'étanchéité (21) pour l'application hermétique contre les éléments d'étanchéité (18) de la porte de véhicule (F) dans sa position fermée, la face d'étanchéité étant prévue sur une partie de châssis de véhicule ou sur un côté étroit (6) d'une porte adjacente, qui est opposé (e) à la tôle frontale (7) dans la position fermée.
